# EUROPEAN PATENT SPECIFICATION

(11) **EP 3 797 175 B1**
(45) Date of publication and mention of the grant of the patent: **15.06.2022**
(21) Application number: 19705223.6
(22) Date of filing: 25.01.2019
(51) Int. Cl.: C21C 5/52, F27B 3/08, F27B 3/20, F27D 11/10

(54) **COOLED ELECTRODE FOR ELECTRIC METALLURGICAL FURNACE**
GEKÜHLTE ELEKTRODE FÜR EINEN METALLURGISCHEN ELEKTROOFEN
ÉLECTRODE REFROIDIE POUR FOUR MÉTALLURGIQUE ÉLECTRIQUE

(30) Priority: 23.05.2018 IT 201800005620
(43) Date of publication of application: 31.03.2021
(73) Proprietor: MIWENTI S.R.L., 24062 Costa Volpino (BG) (IT)
(72) Inventor: BIANCHI, Renato, 24060 Sovere, Bergamo (IT)
(74) Representative: De Lorenzo, Danilo
(86) International application number: PCT/IB2019/050632
(87) International publication number: WO 2019/224613

(56) References cited:
- EP-A1- 0 834 579
- US-A- 5 153 895
- BULLERSCHEN K G ET AL: "KUEHLUNG VON LICHTBOGENOFENELEKTRODEN DURCH WAERMEROHRE", STAHL UND EISEN, VERLAG STAHLEISEN, DUSSELDORF, DE, vol. 110, no. 8, 14 August 1990 (1990-08-14), pages 91-98, XP000168123, ISSN: 0340-4803

## Description

The present invention is generally included in the field of melting metals by means of an electric furnace.

More specifically, the present invention relates to an electrode for an electric furnace for melting metals, for example for an electric arc furnace or for secondary metallurgy furnaces, such as ladle furnaces.

In the steel industry, it is known to melt metals in melting furnaces, such as electric arc furnaces (EAFs), which produce steel using an electric arc to melt scrap metal, hot metal, iron-based materials or other metal materials placed inside the furnace. Documents US5153895A and EP0834579A1 disclose cooled electrodes suitable for such electric arc furnaces.

In the melting stage, the electric arc and burners melt the metal load into a molten metal pool. Typically, the melting process involves the use of graphite electrodes.

The heat necessary to melt metals is generated by passing current between one or more electrodes, with the consequent generation of an electric arc between the electrodes and the metal. The high temperature generated by the electric arc melts the metals and other components inserted in the furnace. Generally, the electrodes used in steel melting furnaces are made up of electrode columns, i.e. a series of electrodes joined together to form a column. In this way, as the electrode closest to the steel to be melted gradually wears down, other electrodes may be joined to the top of the column so as to maintain the same length of the column and continue the melting process.

Due to the high thermal conductivity of graphite, in addition to the electrode tip, the entire electrode column also reaches very high temperatures. To compensate for such an increase in temperature, it is known to spray the outside of the electrodes with water to reduce the external temperature thereof.

Unfortunately, despite these measures, the performance of a graphite electrode is strongly degraded, in terms of wear time, by such heat stress and increase in temperature. This requires keeping a stock of graphite electrodes always on hand to constantly replace the electrodes as they wear out.

The object of the present invention, as set forth in the appended claims, is to solve the aforesaid drawbacks of the graphite electrodes of the prior art. In particular, one of the objects of the present invention is to make an electrode for an electric furnace that has better performance than the graphite electrodes of the prior art and thus has a longer life cycle and does not require continuous replacements.

According to the invention, such objects are achieved by an electrode for an electric metallurgical furnace and an arc furnace according to the accompanying independent claims. Preferred embodiments of the invention are defined in the dependent claims.

The features and advantages of the electrode for an electric metallurgical furnace and the arc furnace will be apparent from the description given below by way of nonlimiting example, according to the accompanying figures, wherein:

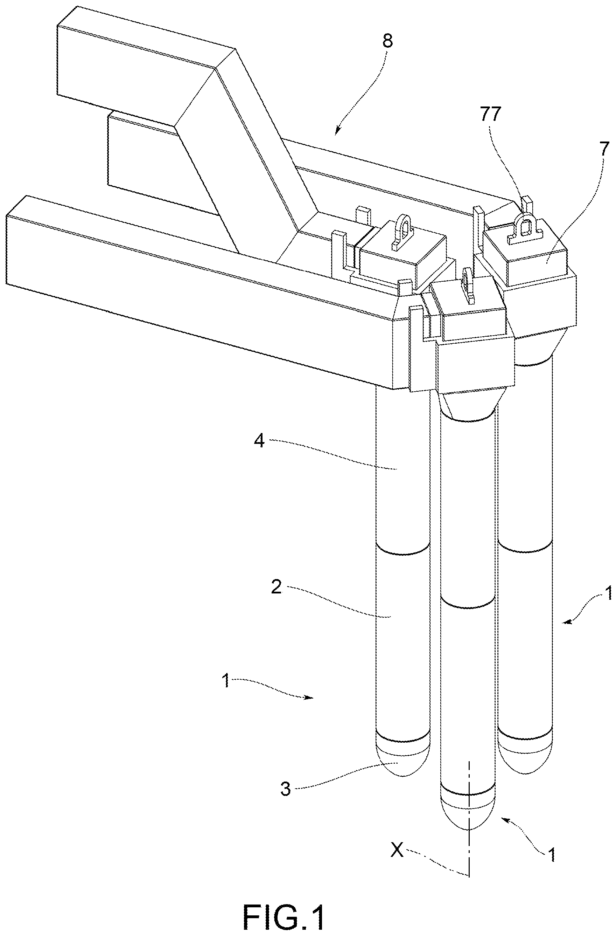

- figure 1 shows a perspective view of three electrodes for an electric metallurgical furnace, for example an electric arc furnace, according to the present invention, each electrode supported by a respective electrode holder arm;

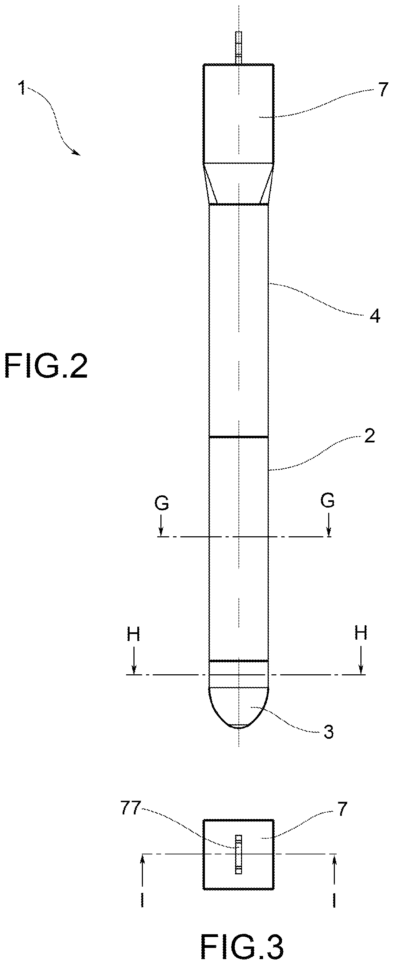

- figure 2 shows a plan view in elevation of an electrode for an electric metallurgical furnace according to an embodiment of the present invention;
- figure 3 shows a plan view from above of the electrode for an electric furnace in figure 2;
- figure 4 shows a longitudinal sectional view along the plane I-I shown in figure 3 of an embodiment of the electrode for an electric furnace according to the present invention;
- figure 4a shows a cross-sectional view along the plane G-G shown in figure 2 of an embodiment of the electrode for an electric furnace according to the present invention;
- figure 4b shows a cross-sectional view along the plane H-H shown in figure 2, of an embodiment of the electrode for an electric furnace according to the present invention;
- figure 5 shows a longitudinal sectional view along the plane I-I shown in figure 3 of a second embodiment of the electrode for an electric furnace according to the present invention;
- figure 5a shows a cross-sectional view along the plane G-G shown in figure 2 of a second embodiment of the electrode for an electric furnace according to the present invention;
- figure 5b shows a cross-sectional view along the plane H-H shown in figure 2, of a second embodiment of the electrode for an electric furnace according to the present invention;
- figure 6 shows a longitudinal sectional view along the plane I-I shown in figure 3, of a third embodiment of the electrode for an electric furnace according to the present invention;
- figure 6a shows a cross-sectional view along the plane G-G shown in figure 2 of a third embodiment of the electrode for an electric furnace according to the present invention;
- figure 6b shows a cross-sectional view along the plane H-H shown in figure 2 of a third embodiment of the electrode for an electric furnace according to the present invention.

In accordance with the accompanying figures, an electrode for an electric furnace is indicated collectively at the reference number 1.

The electrode 1 is suitable for application in an electric metallurgical furnace, preferably of the electric arc type, having a basin for melting metals. Therefore, the present invention is also aimed at a metallurgical arc furnace comprising at least one electrode 1 according to the present invention.

The electrode 1 comprises an electrode body 2 made of electrically conductive material, preferably copper or copper alloy, extending between a head end 21 and a tail end 22 along a longitudinal direction X. Preferably, the electrode body 2 has a substantially cylindrical shape with the axis of the cylinder parallel to the longitudinal direction X.

Making the electrode body 2 out of copper or copper alloy allows the heat dissipation to be maximized and at the same time an adequate electrical conductivity and a long wear time to be guaranteed.

The electrode 1 further comprises a head 3, joined to the electrode body 2, preferably releasably from the electrode body 2, for example by means of a screw or bayonet connection.

The head 3 is preferably made of a different material than the material used to make the electrode body 2, and preferably tungsten. Tungsten provides a high capacity to withstand the high temperatures generated by the electric arc and at the same time an adequate electrical conductivity.

In a preferred embodiment the electrode body 2 is made partly or preferably entirely of copper and the head of tungsten.

The electrode body 2 and/or the head 3 have cooling channels 61, 200, 201, 202, 203, 204, 205, 220, 221, 300, 302, 61 suitable for a cooling fluid to pass through, for example water or a cooling gas, for cooling the electrode 1.

Preferably, the cooling channels extend and pass through the electrode body 2 from the head end 21 to the tail end 22 in the longitudinal direction X. Preferably, moreover, the cooling channels are obtained only within the electrode body, so that the cooling fluid circulating in the inner channels is not in contact with the outside environment.

In an advantageous embodiment, the electrode 1 comprises an extension body 4 releasably joined to the electrode body 2 on the opposite side relative to the head 3, near the tail end 22.

The extension body 4 allows the longitudinal extension of the electrode 1 to be extended in the direction X at will, so that the length of the electrode 1 may be adjusted according to the size of the furnace and the distance from the metallic material to be melted in the furnace.

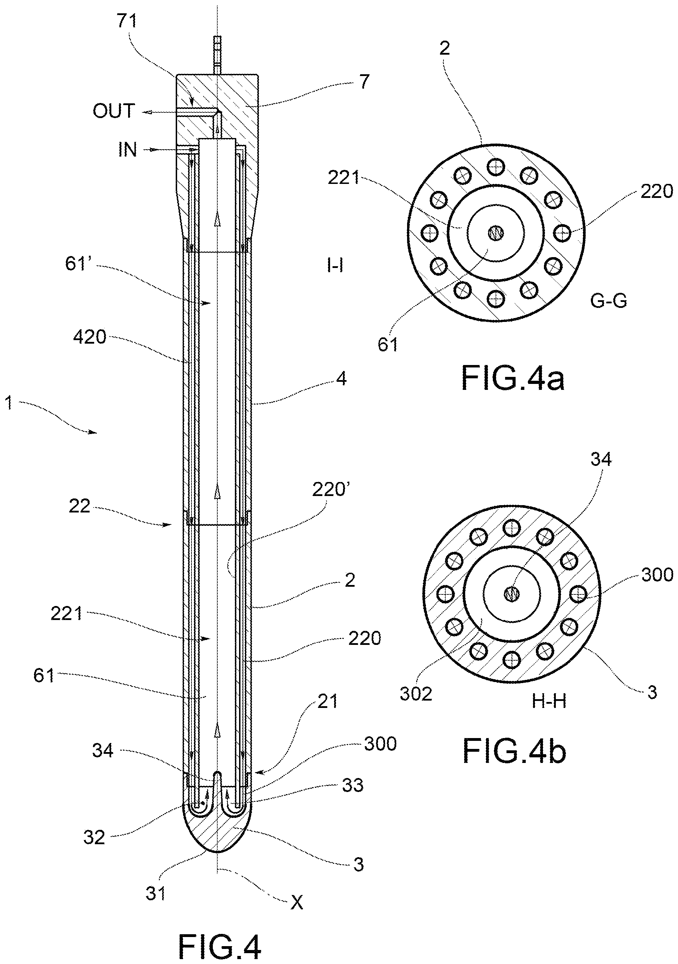

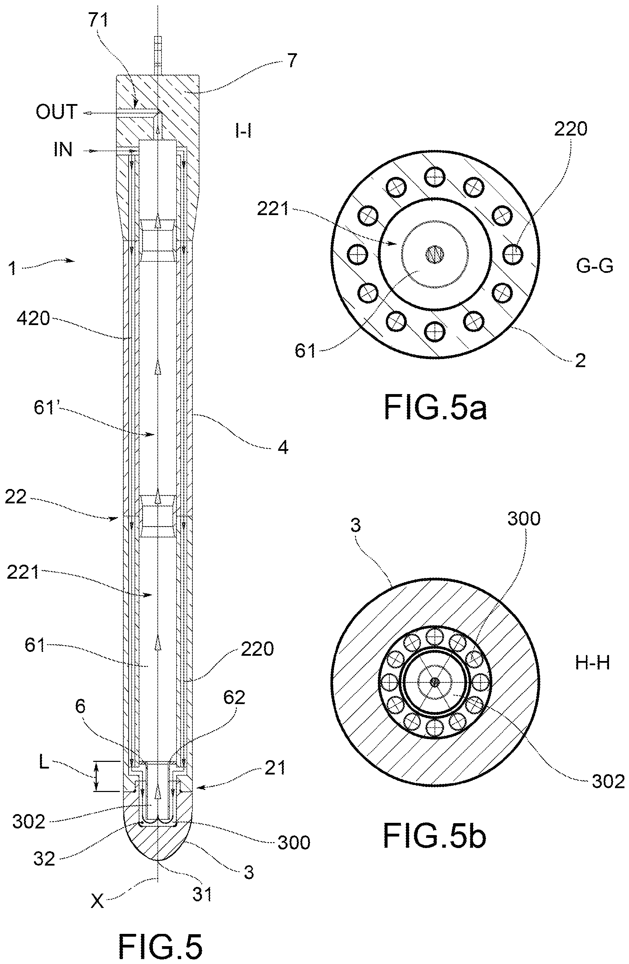

Preferably, the electrode 1 comprises a connection nipple 5 that connects the electrode body 2 and the extension body 4, as, for example, shown in figures 5 to 6. The connection nipple is preferably made of stainless steel. Alternatively, the extension body 4 is directly coupled to the electrode body 2 by means of threaded or bayonet coupling means, as shown for example in figure 4.

In a preferred variant embodiment, the electrode body 2 and the extension body 4 are identical. In a further variant, the electrode body 2 and the extension body 4 are identical except near the head end 21 of the electrode body 2.

The cooling channels 61, 200, 201, 202, 203, 204, 205, 220, 221, 300, 302 comprise delivery channels 200, 202, 204, 220a, 220, suitable to convey the cooling fluid in the direction proceeding from the tail end 22 to the head end 21 and at least one return channel 61, 201, 203, 205, suitable to convey the cooling fluid in the direction proceeding from the head end 21 to the tail end 22. Such delivery channels 200, 202, 204, 220a, 220, and the return channel (s) 61, 201, 203, 205, are obtained in the electrode body 2, and in particular in the shell of the electrode body 2, for example when the electrode body 2 is made according to a substantially cylindrical geometry.

Preferably, the electrode body 2 has a central through hole 221 from the head end 21 to the tail end 22. Such a through hole 221 contains at least one of the delivery channels 220, 220a and/or at least one 61 of the return channels.

Preferably, the through hole 221 itself forms one 61 of the return channels or one 220 of the delivery channels.

The cooling channels further comprise at least one head delivery channel 300 suitable to convey the cooling fluid to the tip 31 of the head 3 and at least one head return channel 302 suitable to convey the cooling fluid away from the tip 31 of the head 3. The head delivery channel 300 and the head return channel 302 are in fluid communication respectively with at least one part of the delivery channels 220, 220a and with at least one part of the return channels 61 of the electrode body 2.

The head delivery channel 300 or the head return channel 302 is preferably obtained directly in the head 3.

Preferably, the electrode 1 comprises a connector 7 suitable to be connected to the electrode body 2 or to the extension body 4 and to the electrode holder arms 8 of the metallurgical furnace. In the connector 7 cooling connector channels 71 are obtained which are fluidically connected on the one side with the cooling channels obtained in the electrode body 2 or in the extension body 4 and on the other side with a cooling fluid supply system (not shown in the figures), suitable to convey and receive the fluid to/from the cooling connector channels 71.

The cooling fluid supply system is preferably equipped with heat exchange means to cool the hot fluid coming from the electrode 1 and re-convey the fluid to the electrode 2 once it has cooled.

In other words, the cooling fluid circulates from the fluid supply system to the cooling channels of the electrode 1 and vice versa, in a closed circuit.

A first variant embodiment of the electrode 2 is shown in detail in figures 4 to 4b. In this variant, the electrode 1 comprises a cooling fluid inlet port IN and a cooling fluid outlet port OUT, preferably obtained on the connector 7 and connected to the cooling fluid supply system (circuit), e.g. by means of delivery and return lines for the cooling fluid, preferably water.

The cooling fluid inlet port IN and the cooling fluid outlet port OUT are directly connected with the cooling channels of the electrode body 2 or are in fluid communication with the electrode body 2 through cooling channels of the extension body 420, 61' obtained in the extension body 4.

In this variant, preferably, the extension body and the electrode body 2 are identical.

The electrode body 2 comprises the through hole 221 defined all around by a hole wall 220'. Such a through hole 221 is in fluid communication with the cooling fluid outlet port OUT and defines the return channel 61 of the treatment fluid.

In this variant, the electrode body 2 comprises a plurality of delivery cooling channels 220 made in the shell of the electrode body 2 and in fluid communication with the cooling fluid inlet port IN.

The delivery cooling channels 220 mainly extend parallel to each other with space between them and around the longitudinal axis X, as shown, for example, in figure 4a. Such delivery channels 220 are suitable for the cooling fluid to pass through in the direction opposite to the flow direction in the return channel 61.

In this variant, preferably, the head 3 comprises two head chambers 32, 33 separated by a septum 34 suitable to extend within the return channel 61 when the head is fixed on the electrode body 2.

Additionally, preferably the extension body 4, the electrode body 2, the head 3 and possibly the connector 7 are connected directly to each other by means of a threaded or bayonet coupling, directly obtained in the electrode body, in the head and/or in the connector.

In this variant, the cooling fluid flows from the inlet port IN to the head 3 through the delivery channels 220, possibly first passing through the delivery channels 420 of the extension body 4, reaches the head chambers 32, 33 and, from these, flows into the return channel 61, i.e. into the through hole 221 of the electrode body 2 until it reaches the cooling fluid outlet port OUT, possibly passing through the extension body 4, i.e. through the return channel 61' of the extension body 4 and the channels of the connector 7.

A second variant embodiment of the electrode 2 is shown in detail in figures 5 to 5b. In this variant, the electrode 1 comprises the cooling fluid inlet port IN and the cooling fluid outlet port OUT, as described above.

In this variant, the extension body and the electrode body 2 differ near the head end 21 of the electrode body.

As in the previous variant of figure 4, the electrode body 2 comprises the through hole 221 defined all around by a hole wall 220'. Such a through hole 221 is in fluid communication with the cooling fluid outlet port OUT and defines the return channel 61 of the treatment fluid.

In the same way, the electrode body 2 comprises a plurality of delivery cooling channels 220 made in the shell of the electrode body 2 and in fluid communication with the cooling fluid inlet port IN.

The delivery cooling channels 220 mainly extend parallel to each other with space between them and around the longitudinal axis X, as shown, for example, in figure 5a. Such delivery channels 220 are suitable for the cooling fluid to pass through in the direction opposite to the flow direction in the return channel 61.

In this variant, preferably, the head 3 comprises a plurality of head delivery channels 300, which mainly extend parallel to each other with space between them and around the longitudinal axis X, as shown for example in figure 5b. Such head delivery channels 300 preferably lead to a single bottom head chamber 32, from which the cooling fluid continues its path toward a head return channel 302.

In an advantageous variant embodiment, e.g. according to figures 5, 6 and 7, an inner channel 6 is fitted and preferably directly supported in the through hole 221 of the electrode body 2.

The inner channel 6 defines one 61 of the return channels, and, in particular in the variant of figure 5, defines the head return channel 302.

The inner channel 6 is spaced from the hole wall 220' which defines the through hole 221.

In the variant of figure 5, the inner channel 6 extends between the head 3 and the electrode body 2 near the head end 21. In particular, the inner channel 6 extends to the bottom head chamber 32 in the head 3 and for a certain finite length L in the through hole 221, measured between the head end 21 and an inner channel end 62 that lies in the through hole 221. Such finite length L is preferably less than the total length in the direction X of the electrode body 2, and even more preferably less than a quarter of the total length of the electrode body 2.

Thus, in the version shown in figure 5, the cooling fluid flows from the inlet port IN toward the head 3 through the delivery channels 220, possibly first passing through the delivery channels 420 of the extension body 4, and reaches the bottom head chamber 32 passing through the head delivery channels 300. From the bottom head chamber 32, the cooling fluid flows into the return channel 61, i.e. into the inner channel 6, to continue toward the cooling fluid outlet port OUT through the central hole 221 of the electrode body 2, possibly passing through the extension body 4, i.e. through the return channel 61' of the extension body 4 and the cooling connector channels 71 of the connector 7.

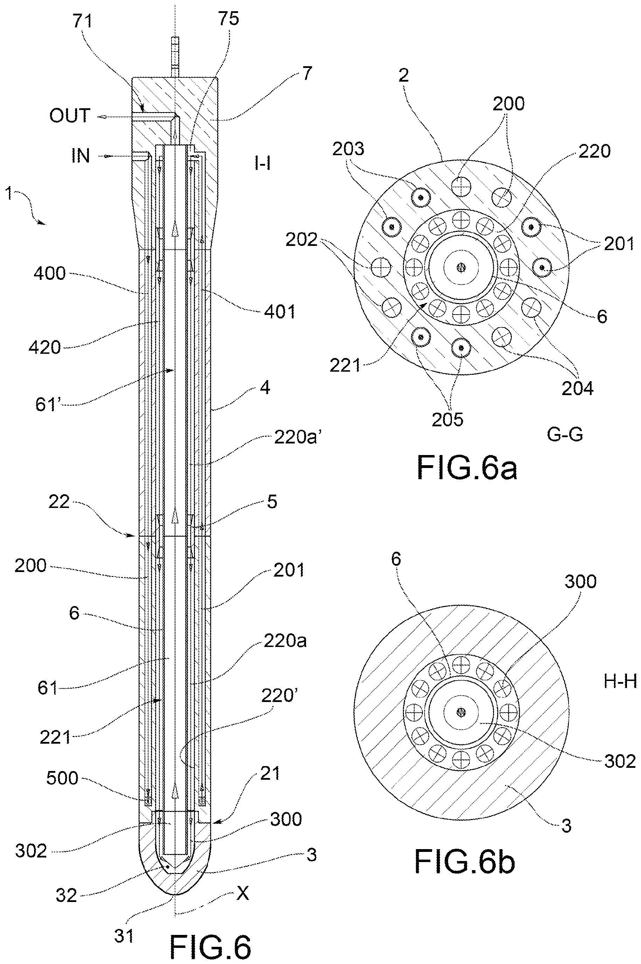

A third variant embodiment of the electrode 2 is shown in detail in figures 6 to 6b. In this variant, the electrode 1 comprises the cooling fluid inlet port IN and the cooling fluid outlet port OUT, as described above.

In this variant, the extension body and the electrode body 2 differ near the head end 21 of the electrode body.

As in the previous variant of figure 5, the electrode body 2 comprises the through hole 221 defined all around by a hole wall 220'. In this variant embodiment, however, the through hole 221 houses throughout its longitudinal extension in the direction X the inner channel 6, which defines one 61 of said return channels. In other words, the inner channel 6 is fitted in the through hole 221 spaced apart from the hole wall 220'. The through hole 221 therefore houses a coaxial delivery cooling channel 220a, defined and located between the return channel 61 (i.e. the inner channel 6) and the hole wall 220'.

The inner channel 6 is therefore suitable for the cooling fluid to pass through in the direction opposite to the cooling fluid flowing in the through hole 221, outside the inner channel 6, i.e. in the delivery channel 220.

In the variant shown in figure 6, 6a, the delivery and return channels further comprise primary delivery channels 200, 202, 204 and primary return channels 201, 203, 205, obtained in the electrode body 2, which do not flow directly into the head delivery channel 300 or the head return channel 302, but which convey the treatment fluid to a coaxial delivery channel 220a, the latter being directly connected with the head delivery channels 300.

In particular, the primary delivery channels 200, 202, 204 comprise pairs of alternating primary delivery channels spaced annularly in the longitudinal direction X with pairs of primary return channels as shown in figure 6a. In particular, in figure 6a, as in all the other attached figures, the direction of the flow of the treatment fluid is indicated with a dot if the direction of the fluid is exiting from the plane of the sheet (return) or with a cross if the direction of the treatment fluid is entering in the plane of the sheet (delivery).

In other words, the primary delivery and return channels are arranged alternately in an orderly delivery-return sequence, until an entire ring is completed.

The fluid flowing in the primary delivery channels 200, 202, 204 flows in a tail-head direction, while the fluid flowing in the primary return channels 201, 203, 205 flows in a head-tail direction.

The fluid flowing in the primary delivery channels 200, 202, 204 coming directly from the cooling fluid inlet port IN arrives in the vicinity of the head end 21 and through a connection chamber 500 at the head end 21 passes into a primary return channel 201, 203, 205 to flow in the opposite direction and to cover the entire length of the electrode body 2 until it reaches the connector 7 where a tail connection cavity 75 is obtained for fluid communication between the primary return channel toward the coaxial delivery cooling channel 220a. In particular, if an extension body 4 is interposed between the electrode body 2 and the connector 7, it is clear that this extension body is provided with primary delivery channels of the extension body 400 and primary return channels of the extension body 401 of the same type, corresponding to and fluidically connected with the primary delivery channels 200, 202, 204 and primary return channels 201, 203, 205 of the electrode body 2.

In the variant embodiment of figure 6, therefore, the cooling fluid proceeds from the inlet port IN into the primary channels 200, 202, 204 until it reaches the head end 21, possibly passing first through the primary delivery channels of the extension body 400. From the head end the fluid flows in the opposite direction through the primary return channels 201, 203, 205 and reaches the connector 7, possibly passing through the primary return channels of the extension body 401. In the vicinity of the connector 7, the cooling fluid passes through the coaxial delivery cooling channel 220a toward the head 3, possibly passing through a coaxial delivery cooling channel with an extension body 220a' .

The cooling fluid thus reaches the bottom head chamber 32 passing through the head delivery channels 300. From the bottom head chamber 32, the cooling fluid flows into the return channel 61, i.e. into the inner channel 6, to continue toward the cooling fluid outlet OUT, possibly passing through the return channel 61' of the extension body 4 and the cooling connector channels 71 of the connector 7.

It is obvious that the embodiments of the head 3 and the electrode body 2 described in each variant embodiment in figures 4 to 6 are associable and interchangeable, as their association and interchangeability is easily understandable to one skilled in the art.

Preferably, the electrode body 3 and/or the extension body 4 and/or the connector 7 are covered with a layer of thermally and electrically insulating material.

Preferably, the connector 7 comprises a hook 77 for lifting the electrode 1.

Innovatively, the electrode according to the present invention, due to the inner cooling by means of a fluid, allows better performance to be obtained relative to the graphite electrodes of the prior art, and, therefore, allows for a longer life cycle, without requiring continuous replacements.

In addition, the improved life cycle eliminates the space needed to store a large quantity of electrodes.

In an advantageous way, the tungsten head allows an electrode to be obtained that is more resistant to possibly impacts or damage due to the loading of solid scrap in the furnace, as well as ensuring adequate conductivity and strength.

In an advantageous way, moreover, making the electrode body 2 and the extension body 4 out of copper, allows an electrode with lower electrical resistivity and higher thermal conductivity to be obtained. With the same dimensions and electrical current passing through, this allows for a lower generated thermal power that must to be dissipated, thus reducing the risk of fatigue failure.

It is clear that a person skilled in the art, in order to satisfy contingent and specific needs, may make changes to the invention described above, all of which are, however, contained within the scope of protection as defined by the following claims.

## Claims

1. Electrode (1) for an electric metallurgical furnace comprising
- an electrode body (2) made of electrically conductive material, preferably copper or copper alloy, extending between a head end (21) and a tail end (22) along a longitudinal direction (X);
- a head (3), joined to the electrode body (2);
- cooling channels (200, 201, 220, 61) being made in the electrode body (2) and/or in the head (3), said channels being suitable for a cooling fluid to pass through for cooling the electrode (1);
wherein the cooling channels (200, 201, 220, 61) comprise delivery channels (200, 220) suitable to convey the cooling fluid in the direction proceeding from the tail end (22) to the head end (21) and at least one return channel (61, 201) suitable to convey the cooling fluid in the direction proceeding from the head end (21) to the tail end (22), said delivery channels (200, 220) and said at least one return channel (61, 201) being formed in the electrode body (2) .

2. Electrode (1) according to claim 1, wherein the electrode body is entirely made of copper or a copper alloy.

3. Electrode (1) according to claim 1 or 2, wherein the head (3) is releasably joined to the electrode body (2).

4. Electrode (1) according to any one of the preceding claims, wherein the head (3) is made of tungsten and the electrode body (2) is made of copper.

5. Electrode (1) according to any one of the preceding claims, comprising an extension body (4) joined releasably to the electrode body (2) on the opposite side with respect to the head (3), near the tail end (22).

6. Electrode (1) according to claim 5, comprising a connecting nipple (5) which joins the electrode body (2) and the extension body (4).

7. Electrode (1) according to claim 5 or 6, wherein the electrode body (2) and the extension body (4) are identical to each other.

8. Electrode (1) according to claim 7, wherein a through hole (221) is made in the electrode body (2) from the head end (21) to the tail end (22), said through hole (221) accommodating at least one of the delivery channels (220) and at least one (61) of the return channels.

9. Electrode (1) according to claim 8, wherein an inner channel (6) which defines one (61) of said return channels is fitted in the through hole (221), said inner channel (6) being spaced from the hole wall (220') defining the through hole (221), and being adapted to be traversed by the cooling fluid in the opposite direction with respect to the direction of the cooling fluid flowing through the through hole (220) externally to the inner channel (6).

10. Electrode (1) according to any one of the preceding claims, wherein the cooling channels comprise at least one head delivery channel (300) suitable to convey the cooling fluid towards the tip (31) of the head (3) and at least one head return channel (302) suitable to convey the cooling fluid in the direction away from the tip (31) of the head (3), said head delivery channel (300) and said head return channels (302) being in fluid communication with at least a part of the delivery channels (200, 220) and with at least a part of the return channels (61, 201) of the electrode body, respectively.

11. Electrode (1) according to any one of the preceding claims, wherein the delivery channels comprise primary delivery channels (200) which are not in fluid communication with the head delivery channel (300) and primary return channels (201) that are not in fluid communication with the head return channel (302).

12. Electrode (1) according to any one of the preceding claims, comprising a connector (7) suitable to be connected to electrode holder arms (8) and to the electrode body (2) or to the extension body (4), there being made in said connector (7) cooling connector channels (71), fluidically connected on one side with the cooling channels (200, 201, 220, 61) made in the electrode body (2) or in the extension body (4) and on the other side with a cooling fluid supply system.

13. Electric arc furnace comprising at least one electrode (1) according to any one of the preceding claims.

## Patentansprüche

1. Elektrode (1) für einen metallurgischen Elektroofen, aufweisend
- einen Elektrodenkörper (2), der aus elektrisch leitfähigem Material, vorzugsweise Kupfer oder eine Kupferlegierung, gebildet ist, der sich zwischen einem Kopfende (21) und einem hinteren Ende (22) entlang einer Längsrichtung (X) erstreckt;
- einen Kopf (3), der mit dem Elektrodenkörper (2) verbunden ist;
- Kühlkanäle (200, 201, 220, 61), die in dem Elektrodenkörper (2) und/oder in dem Kopf (3) hergestellt sind, wobei die Kanäle geeignet sind, damit ein Kühlfluid durch diese hindurch strömt, um die Elektrode (1) zu kühlen;
wobei die Kühlkanäle (200, 201, 220, 61) Zuführkanäle (200, 220), die geeignet sind, um das Kühlfluid in der Richtung, die von dem hinteren Ende (22) ausgeht, zu dem Kopfende (21) zu befördern, und mindestens einen Rückführkanal (61, 201), der geeignet ist, um das Kühlfluid in der Richtung, die von dem Kopfende (21) ausgeht, zu dem hinteren Ende (22) zu befördern, aufweisen, wobei die Zuführkanäle (200, 220) und der mindestens eine Rückführkanal (61, 201) in dem Elektrodenkörper (2) gebildet sind.

2. Elektrode (1) nach Anspruch 1, wobei der Elektrodenkörper vollständig aus Kupfer oder einer Kupferlegierung gebildet ist.

3. Elektrode (1) nach Anspruch 1 oder 2, wobei der Kopf (3) lösbar mit dem Elektrodenkörper (2) verbunden ist.

4. Elektrode (1) nach einem der vorherigen Ansprüche, wobei der Kopf (3) aus Wolfram hergestellt ist und der Elektrodenkörper (2) aus Kupfer hergestellt ist.

5. Elektrode (1) nach einem der vorherigen Ansprüche, aufweisend einen Verlängerungskörper (4), der lösbar mit dem Elektrodenkörper (2) auf der gegenüberliegenden Seite bezüglich des Kopfes (3) in der Nähe des hinteren Endes (22) verbunden ist.

6. Elektrode (1) nach Anspruch 5, aufweisend einen Anschlussnippel (5), welcher den Elektrodenkörper (2) und den Verlängerungskörper (4) verbindet.

7. Elektrode (1) nach Anspruch 5 oder 6, wobei der Elektrodenkörper (2) und der Verlängerungskörper (4) identisch zueinander sind.

8. Elektrode (1) nach Anspruch 7, wobei eine Durchgangsbohrung (221) in dem Elektrodenkörper (2) von dem Kopfende (21) zu dem hinteren Ende (22) hergestellt ist, wobei in der Durchgangsbohrung (221) mindestens einer der Zuführkanäle (220) und mindestens einer (61) der Rückführkanäle aufgenommen ist.

9. Elektrode (1) nach Anspruch 8, wobei ein innerer Kanal (6), welcher einen (61) der Rückführkanäle definiert, in der Durchgangsbohrung (221) eingepasst ist, wobei der innere Kanal (6) von der Bohrungswand (220') beabstandet ist, welche die Durchgangsbohrung (221) definiert, und angepasst ist, um von dem Kühlfluid in der Gegenrichtung bezüglich der Richtung des Kühlfluids, das durch die Durchgangsbohrung (220) außen zu dem inneren Kanal (6) strömt, durchströmt zu werden.

10. Elektrode (1) nach einem der vorherigen Ansprüche, wobei die Kühlkanäle mindestens einen Kopfzuführkanal (300), der geeignet ist, um das Kühlfluid zu der Spitze (31) des Kopfes (3) zu befördern, und mindestens einen Rückführkanal (302), der geeignet ist, um das Kühlfluid in der Richtung von der Spitze (31) des Kopfes (3) weg zu befördern, aufweisen, wobei der Kopfzuführkanal (300) und die Kopfrückführkanäle (302) jeweils in Fluidverbindung mit mindestens einem Teil der Zuführkanäle (200, 220) und mit mindestens einem Teil der Rückführkanäle (61, 201) des Elektrodenkörpers stehen.

11. Elektrode (1) nach einem der vorherigen Ansprüche, wobei die Zuführkanäle primäre Zuführkanäle (200), welche nicht in Fluidverbindung mit dem Kopfzuführkanal (300) stehen, und primäre Rückführkanäle (201), die nicht in Fluidverbindung mit dem Kopfrückführkanal (302) stehen, aufweisen.

12. Elektrode (1) nach einem der vorherigen Ansprüche, aufweisend einen Steckverbinder (7), der geeignet ist, um an Elektrodenhalterarme (8) und an dem Elektrodenkörper (2) oder an dem Verlängerungskörper (4) angeschlossen zu werden, wobei in dem Steckverbinder (7) Kühlsteckverbinderkanäle (71) hergestellt sind, die fluidisch auf einer Seite mit den Kühlkanälen (200, 201, 220, 61), die in dem Elektrodenkörper (2) oder in dem Verlängerungskörper (4) hergestellt sind, und auf der anderen Seite mit einem Kühlfluidversorgungssystem verbunden sind.

13. Elektrolichtbogenofen, aufweisend mindestens eine Elektrode (1) nach einem der vorherigen Ansprüche.

## Revendications

1. Electrode (1) pour un four métallurgique électrique comprenant :
- un corps d'électrode (2) formé d'un matériau électriquement conducteur, préférentiellement du cuivre ou un alliage de cuivre, s'étendant entre une extrémité de tête (21) et une extrémité de queue (22) dans une direction longitudinale (X) ;
- une tête (3) raccordée au corps d'électrode (2) ;
- des canaux de refroidissement (200, 201, 220, 61) étant formés dans le corps d'électrode (2) et/ou dans la tête (3), lesdits canaux étant aptes à être traversés par un fluide de refroidissement pour refroidir l'électrode (1) ;
dans laquelle les canaux de refroidissement (200, 201, 220, 61) comprennent des canaux de distribution (200, 220) aptes à transporter le fluide de refroidissement dans la direction depuis l'extrémité de queue (22) jusqu'à l'extrémité de tête (21) et au moins un canal de retour (61, 201) apte à transporter le fluide de refroidissement dans la direction depuis l'extrémité de tête (21) jusqu'à l'extrémité de queue (22), lesdits canaux de distribution (200, 220) et ledit au moins un canal de retour (61, 201) étant formés dans le corps d'électrode (2).

2. Electrode (1) selon la revendication 1, dans laquelle le corps d'électrode est entièrement formé de cuivre ou d'un alliage de cuivre.

3. Electrode (1) selon la revendication 1 ou 2, dans laquelle la tête (3) est raccordée de manière amovible au corps d'électrode (2).

4. Electrode (1) selon l'une quelconque des revendications précédentes, dans laquelle la tête (3) est formée de tungstène et le corps d'électrode (2) est formé de cuivre.

5. Electrode (1) selon l'une quelconque des revendications précédentes, comprenant un corps d'extension (4) raccordé de manière amovible au corps d'électrode (2) sur le côté opposé à la tête (3), à proximité de l'extrémité de queue (22).

6. Electrode (1) selon la revendication 5, comprenant un embout de liaison (5) qui raccorde le corps d'électrode (2) et le corps d'extension (4).

7. Electrode (1) selon la revendication 5 ou 6, dans laquelle le corps d'électrode (2) et le corps d'extension (4) sont identiques l'un à l'autre.

8. Electrode (1) selon la revendication 7, dans laquelle un trou traversant (221) est formé dans le corps d'électrode (2) depuis l'extrémité de tête (21) jusqu'à l'extrémité de queue (22), ledit trou traversant (221) logeant au moins l'un des canaux de distribution (220) et au moins l'un (61) des canaux de retour.

9. Electrode (1) selon la revendication 8, dans laquelle un canal intérieur (6) qui définit l'un (61) desdits canaux de retour est ajusté dans le trou traversant (221), ledit canal intérieur (6) étant espacé de la paroi de trou (220') définissant le trou traversant (221), et étant apte à être traversé par le fluide de refroidissement dans la direction opposée à la direction du fluide de refroidissement s'écoulant à travers le trou traversant (220) à l'extérieur du canal intérieur (6).

10. Electrode (1) selon l'une quelconque des revendications précédentes, dans laquelle les canaux de refroidissement comprennent au moins un canal de distribution de tête (300) apte à transporter le fluide de refroidissement vers la pointe (31) de la tête (3) et au moins un canal de retour de tête (302) apte à transporter le fluide de refroidissement dans la direction à l'écart de la pointe (31) de la tête (3), ledit canal de distribution de tête (300) et lesdits canaux de retour de tête (302) étant en communication fluidique respectivement avec au moins une partie des canaux de distribution (200, 220) et avec au moins une partie des canaux de retour (61, 201) du corps d'électrode.

11. Electrode (1) selon l'une quelconque des revendications précédentes, dans laquelle les canaux de distribution comprennent des canaux de distribution primaires (200) qui ne sont pas en communication fluidique avec le canal de distribution de tête (300) et des canaux de retour primaires (201) qui ne sont pas en communication fluidique avec le canal de retour de tête (302).

12. Electrode (1) selon l'une quelconque des revendications précédentes, comprenant un connecteur (7) apte à être relié à des bras de support d'électrode (8) et au corps d'électrode (2) ou au corps d'extension (4), en formant, dans ledit connecteur (7), des canaux de connecteur de refroidissement (71) reliés fluidiquement d'un côté aux canaux de refroidissement (200, 201, 220, 61) formés dans le corps d'électrode (2) ou dans le corps d'extension (4) et de l'autre côté à un système d'alimentation en fluide de refroidissement.

13. Four à arc électrique comprenant au moins une électrode (1) selon l'une quelconque des revendications précédentes.
